# EUROPÄISCHE PATENTSCHRIFT

(11) **EP 1 055 953 B1**
(45) Veröffentlichungstag und Bekanntmachung des Hinweises auf die Patenterteilung: **05.10.2005**
(21) Anmeldenummer: 00110672.3
(22) Anmeldetag: 19.05.2000
(51) Int. Cl.: G02B 27/10, G02B 27/12, G02B 13/22

(54) **Hybrides Abbildungssystem**
Hybrid imaging system
Système d'imagerie hybride

(30) Priorität: 25.05.1999 DE 19923872
(43) Veröffentlichungstag der Anmeldung: 29.11.2000
(73) Patentinhaber: Jahns, Jürgen, Prof. Dr., 40211 Düsseldorf (DE)
(72) Erfinder: Jahns, Jürgen, Prof. Dr., 40211 Düsseldorf (DE)
(74) Vertreter: Schrooten, Rolf

(56) Entgegenhaltungen:
- EP-A- 0 601 485
- EP-A- 0 744 664
- US-A- 4 422 046
- US-A- 4 939 630
- US-A- 5 267 183
- US-A- 5 798 866
- JAHNS J. ET AL: "Parallel optical interconnections using surface-emitting microlasers and a hybrid imaging system" OPTICS COMMUNICATION, Bd. 109, Nr. 3-4, 1. Juli 1994 (1994-07-01), Seiten 328-337, AMSTERDAM, NL

## Beschreibung

Die Erfindung betrifft ein Verfahren zur Abbildung einer Wellenfront eines sich in Wellen ausbreitenden Mediums. Die Erfindung betrifft außerdem ein System zur Abbildung einer Wellenfront insbesondere eines Lichtstrahles geringer Divergenz beispielsweise eines Laserstrahles oder eines Sonnenstrahles, wobei das System in Ausbreitungsrichtung des Mediums hintereinander angeordnete Komponenten aufweist.

Ein solches System ist beispielsweise aus der US 5,267,183 bekannt. In diesem wird die Wellenfront eines Laserstrahles durch ein Linsensystem abgebildet.
Aus dem Artikel "Parallel optical interconnections using surface-emitting microlasers and a hybrid imaging system", OPTICS COMMUNICATION, AMSTERDAM, 01. Juli 1994, Band 109, Nr. 3/4, Seiten 328 - 337, ist es bekannt, solche hybriden Abbildungssysteme für die gleichzeitige Abbildung der Wellenfronten mehrerer paralleler Laserstrahlen zu nutzen.

In der Strahloptik, insbesondere bei der Führung von Laserstrahlen, werden Strahlen bekanntermaßen mit ihrer in einer Ebene bestehenden lateralen Amplitudenverteilung auf eine zweite Ebene abgebildet (Strahltranslation). Bei diesen Abbildungen ist darauf zu achten, daß die Minderung der Qualität des Strahles durch Aberrationen möglichst gering ist. Solche Abbildungen werden auch in Systemen eingesetzt, die Laserstrahlen besonders hoher Intensität, wie sie zur Materialbearbeitung oder zur Energieerzeugung mittels Laserfusion eingesetzt werden, führen. Bei solchen Systemen kommt es einerseits darauf an, daß die geringe Divergenz des Strahles und damit dessen Qualität erhalten bleibt.

Andererseits ist es entscheidend, daß eine starke und daher zerstörerische Konzentration der Energie auf einem Punkt vermieden wird. Gerade bei Laserstrahlen, die Leistungen bis in den Bereich von Terawatt haben können, müssen Foki kleiner Strahlquerschnitte sorgsam vermieden werden, da es wegen der großen Leistungsdichte zu einer Zerstörung von angrenzenden Materialien oder sogar zur Plasmaionisation der Luft kommen kann. Aufgrund der genannten Probleme kommen die bislang bekannten Verfahren zur Strahltranslation, wie die Strahlführung mit Glasfasern oder die Verwendung eines einfachen telezentrischen Abbildungssystems mit zwei nacheinander angeordneten in einer Ebene fokussierenden Einzellinsen, nicht oder nur bedingt in Betracht.

Zur Lösung der genannten Probleme ist es bekannt, die kritischen Foki wegen der besonders hohen Energiedichte in Vakuumzellen abzubilden, um damit eine Plasmaionisation zu vermeiden. Dies ist jedoch nur in gewissem Rahmen und unter großem technischen Aufwand möglich. Es ist auch bekannt, afokale Linsenanordnungen oder Systeme mit diffraktiver Optik einzusetzen. Diese Systeme sind jedoch sehr aufwendig oder bedingen hohe Verluste in der Effizienz der Strahlung. Weiterhin sind Verfahren zur Strahltranslation bekannt, die sich holographischer Methoden beispielsweise unter Einsatz des Prinzips der Phasenkonjugation bedienen. Bei diesen Verfahren sind allerdings detaillierte Informationen über die Phasenverteilung innerhalb der Lichtwelle notwendig, die nur mit vergleichsweise großem Aufwand bereit gestellt werden können. Diese Systeme sind unter wissenschaftlichem Aspekt interessant, lassen sich jedoch wegen ihrer geringen Wirtschaftlichkeit in der Praxis kaum einsetzen.

Aufgabe der vorliegenden Erfindung ist es, ein Verfahren zur Abbildung von Wellenfronten sich ausbreitender Medien zu schaffen, das mit einfachen und preiswerten Mitteln und unter Vermeidung einer Qualitätsminderung der Wellenfront eine Strahltranslation auch bei hohen Strahlintensitäten zuläßt. Gleichzeitig ist es Aufgabe der Erfindung, ein System zur Strahltranslation einer solchen Wellenfront, insbesondere eines Laserstrahles oder eines Sonnenstrahles, zu schaffen.

Diese Aufgaben werden durch das Verfahren nach Anspruch 1 und das System nach Anspruch 3 gelöst.

Der besondere Gedanke der Erfindung liegt darin, den Strahl oder die Wellenfronten hoher Intensität in Teilstrahlen (Teilfronten) mit entsprechenden Teilintensitäten zu zerlegen und nach der Translation wieder zusammenzufügen. Dieser generelle Gedanke läßt sich mit Wellenfronten in verschiedenen Medien, wie beispielsweise elektromagnetischer Strahlung verschiedener Wellenlängen, Schall und sogar mit Korpuskularstrahlung realisieren. Außerdem sind verschiedene Mittel zur Aufteilung der einen Wellenfront in Teilfronten möglich. So kann die Aufteilung je nach Medium und Anwendung mittels beugender Fresnel-Linsen, sowie reflektierender Spiegel- oder brechender Linsenarrays geschehen, wobei dies keine abschließende Liste aller möglichen wellenoptischen Elemente ist. Besonders vorteilhaft läßt sich die Erfindung jedoch bei der Führung von Lichtstrahlen geringer Divergenz wie Laserstrahlen oder Sonnenstrahlen einsetzten. Die Wellenlängen des Lichtes können dabei zwischen etwa 100 und 10.000 Nanometern variieren.

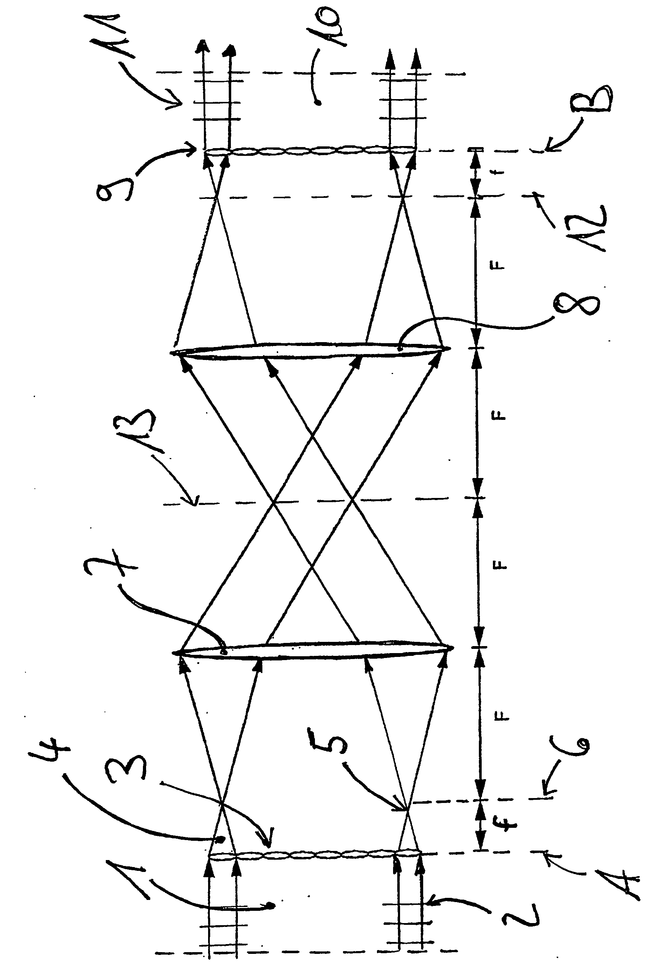

Als wellenoptische Elemente lassen sich im Falle von Licht vorteilhafterweise Linsenarrays einsetzen, die statt einer Apertur eine größere Anzahl kleinerer Aperturen aufweisen und damit die Intensität des ursprünglichen Strahles aufteilen. Nach der Translation über ein telezentrisches System werden die Teilfronten durch ein entsprechendes Linsenarray wieder zusammengeführt, so daß nach der Abbildung die ursprüngliche Wellenfront in ihrer abgebildeten Form wieder vorhanden ist. Der wesentliche Vorteil der Erfindung liegt dabei in der Minderung der Intensität, wobei deren Grad von der Zahl der in den Arrays zusammengefaßten Einzellinsen abhängt und daher frei wählbar ist. Bei dem erfindungsgemäßen System handelt es sich somit um ein "hybrides" Abbildungssystem, das aus einem herkömmlichen telezentrischen System und - im Falle dieses besonderen Ausführungsbeispieles - einem System aus Mikrolinsenarrays zusammengesetzt ist.

Die Vorteile des hybriden Systems liegen generell darin, daß dadurch eine Strahltranslation bewerkstelligt wird, ohne daß es zu kritischen Spotbildungen kommen kann. Die Gefahr der Zerstörung und der Plasmaionisation sind damit gebannt, ohne daß es zu einer Einbuße an Strahlqualität kommt. In Falle der Abbildung von Lichtstrahlen zeichnet sich die Erfindung durch eine einfache Realisierung aus, da sich Linsenarrays beliebiger Dimensionen in Massenfertigung mit großer Präzision herstellen lassen. Die Präzision gewährleistet, daß bei der Abbildung kaum Verluste auftreten. Die Erfindung ermöglicht es demnach, Laserstrahlen hoher Intensität ohne die Gefahr einer Plasmaionisation und ohne Beschädigung von Bauteilen zu führen. Dabei kann auf kostenintensive Maßnahmen zur Erzeugung eines Vakuums verzichtet werden.

Wegen der einfachen Geometrie ist es besonders vorteilhaft, das ersten Linsenarray so zu konzipieren, daß die Foki der einzelnen Teillinsen auf einer gemeinsamen Fläche liegen, die im einfachsten Fall plan ist und eine gemeinsame Brennebene bildet. Auch ist es vorteilhaft, die beiden Linsenarrays identisch auszubilden, so daß jede der von der Wellenfront getroffenen Teillinsen des ersten Linsenarrays ein entsprechendes Gegenstück in einer Teillinse des zweiten Linsenarrays findet. So wird der von dem ersten Array zerlegte Strahl in gleicher Weise wieder zusammengefügt.

Bei der Auswahl der Parameter der Mikrolinsen ist es vorteilhaft, große Verhältnisse von Brennweiten f und Aperturöffnungen d zu wählen, so daß die Brennpunkte hinter den Linsen große Durchmesser haben. Charakteristisch für das hybride Abbildungssystem ist, daß die Anforderungen an die Qualität der Linsen gegenüber den in einem konventionellen Abbildungssystem verwendeten Linsen reduziert sind. Dies bedeutet einerseits, daß diese Linsen preiswerter sein können, zum anderen, daß sie weniger Aberrationen aufweisen.

Die Erfindung läßt sich auch vorteilhafterweise in Laser-Resonatoren einsetzen, wo die Intensität und damit die zerstörerische Kraft des Strahles durch Reflexionen erhöht wird. Es ist ebenfalls denkbar, die Erfindung zur Führung intensiver kollimierter Sonnenstrahlung einzusetzen, um eine Ausnutzung der Sonnenenergie zu ermöglichen.

Eine besonders vorteilhafte Ausführungsform der Erfindung wird nachfolgend anhand der Figur näher beschrieben.

In der Figur ist der Strahlengang eines Systems zur Strahltranslation schematisch dargestellt. Darin gezeigt ist ein Lichtstrahl 1 mit seinen angedeuteten Wellenfronten 2. Der Lichtstrahl trifft auf ein Array 3 aus Mikrolinsen (Teillinsen), das ein erstes wellenoptisches Element des Systems darstellt. Der Strahl 1 wird durch das Linsenarray 3 in Teilstrahlen 4 mit entsprechend reduzierter Intensität aufgeteilt, wobei die einzelnen Teilstrahlen 4 von den Linsen des Arrays 3 zu einer der Zahl der Linsen entsprechenden Anzahl von Foki 5 fokussiert werden. Die Foki 5 aller Linsen des Arrays 3 liegen in einer gemeinsamen Brennebene 6, die den Abstand f vom Linsenarray 3 hat.

In Strahlrichtung hinter dem Linsenarray 3 ist ein telezentrisches System mit zwei hintereinander aufgereihten Einzellinsen 7 und 8 angeordnet. Bei dem telezentrischen System handelt es sich um eine sogenannte 4-f Anordnung, bei der zwei identische Linsen in doppeltem Fokalabstand koaxial hintereinander aufgereiht sind, so daß die beiden Einzellinsen 7 und 8 eine gemeinsame Brennebene 13 haben. Das telezentrische System bildet die Foki 5 des Linsenarrays 3 auf ein zweites Array 9 von Mikrolinsen ab, das in seiner Geometrie dem Array 3 entspricht. Das Linsenarray 9 setzt die einzelnen Teilstrahlen wieder zu einem kompletten Strahl 10 zusammen und kollimiert sie zu Ausgangswellen 11. Das System ist so konzipiert, daß jede der von der Wellenfront beaufschlagten Teillinsen des ersten Linsenarrays 3 ein entsprechendes Gegenstück in einer Teillinse des zweiten Linsenarrays 9 hat, wobei die Paare von Teillinsen derart angeordnet sind, daß der von der Teillinse des ersten Arrays 3 fokussierte Teil der Wellenfront von der Teillinse zweiten Arrays 9 abgebildet wird. In dem dargestellten System liegen zudem die Foki des ersten Linsenarrays 3 in der Brennebene 6 der ersten Einzellinse 7 und die Brennebene 12 des zweiten Linsenarrays 9 in der Brennebene der zweiten Einzellinse 8.

Bedingt durch die Aufteilung der einfallenden Lichtwelle in mehrere Aperturen reduziert sich die Lichtleistung pro Apertur um einen Faktor N, wobei N die Anzahl der Linsen in dem zweidimensionalen Array ist. N ergibt sich aus dem Verhältnis des Strahlquerschnitts der Eingangswelle und der Fläche einer Mikrolinse. Je nach der Dimensionierung des Systems kann N Werte zwischen 100 und 10000 annehmen. Die Reduktion der Lichtleistung pro Apertur bedeutet, daß in den auftretenden Foki eine entsprechend niedrigere Leistungsdichte auftritt als bei einem Abbildungssystem mit einer einzigen größeren Apertur. Die Wellenfront der translatierten Welle in Ebene B ist im Idealfall identisch mit der der Welle in Ebene A, da die unterschiedlichen Teilstrahlen wieder phasengerecht zusammengefügt werden. Dies ist auch dann möglich, wenn die Eingangswelle leicht aberriert ist.

## Patentansprüche

1. Verfahren zur Abbildung einer Wellenfront eines sich in Wellen ausbreitenden Mediums,
**dadurch gekennzeichnet,**
- **daß** die Wellenfront (2) durch ein erstes Linsenarray (3), mit mindestens zwei jeweils auf einen Fokus (5) fokussierenden Teillinsen, in Teilfronten (4) entsprechend reduzierter Intensität aufgeteilt wird,
- **daß** die durch das erste Linsenarray (3) gebildeten Teilfronten (4) von einem zwei Einzellinsen (7,8) aufweisenden telezentrischen Abbildungssystem auf ein zweites Linsenarray (9) mit mindestens zwei kollimierenden Teillinsen (9) abgebildet werden,
- **daß** die Teilfronten (4) durch das zweite Linsenarray (9) zu einer kollimierten austretenden Wellenfront (11) zusammenfügt werden.

2. Verfahren nach Anspruch 1 ,
**dadurch gekennzeichnet,**
**daß** das erste Linsanarray (3) die Wellenfront (2) durch Beugung, Brechung und/oder durch Reflexion in Teilfronten (4) aufteilt.

3. System mit in Ausbreitungsrichtung hintereinander angeordneten Komponenten umfassend
- ein erstes Linsenarray (3), mit mindestens zwei jeweils auf einen Fokus (5) fokussierenden Teillinsen,
- eine erste Einzellinse (7),
- eine zweite Einzellinse (8) und
- ein zweites Linsenarray (9) mit mindestens zwei kollimierenden Teillinsen,
- **dadurch gekennzeichnet daß** die Foki (5) des ersten Linsenarrays (3) in der objektseitigen Brennebene (6) der ersten Einzellinse (7) und die Brennebene (12) des zweiten Linsenarrays (9) in der bildseitigen Brennebene (12) der zweiten Einzellinse (8) liegen
und daß das System zur Abbildung einer Wellenfront eines sich in Wellen ausbreitenden Mediums nach dem Verfahren der Ansprüche 1 und 2 geeignet ist.

4. System nach Anspruch 3,
**dadurch gekennzeichnet, daß** die Foki (5) der Teillinsen des ersten Linsenarrays (3) auf einer gemeinsamen Fläche (6), insbesondere in einer gemeinsamen Brennebene, liegen.

5. System nach Anspruch 3 oder 4,
**dadurch gekennzeichnet, daß** jede der von der Wellenfront beaufschlagten Teillinsen des ersten Linsenarrays (3) ein entsprechendes Gegenstück in einer Teillinse des zweiten Linsenarrays (9) hat, wobei die beiden sich entsprechenden Teillinsen derart angeordnet sind, daß der von der ersten Teillinse fokussierte Teil der Wellenfront von der zweiten Teillinse abgebildet wird.

6. System nach einem der vorherigen Ansprüche 3 bis 5,
**dadurch gekennzeichnet, daß** die beiden hintereinander angeordneten Einzellinsen (7,8) eine gemeinsame Brennebene (13) haben.

7. System nach einem der vorherigen Ansprüche 3 bis 6,
**dadurch gekennzeichnet, daß** die beiden Einzellinsen (7,8) einen telezentrischen Strahlengang bilden.

8. System nach einem der vorherigen Ansprüche 3 bis 7,
**dadurch gekennzeichnet, daß** das Medium elektromagnetische Strahlung ist.

9. System nach Anspruch 8,
**dadurch gekennzeichnet, daß** das Medium elektromagnetische Strahlung Licht einer Wellenlänge im Bereich zwischen Ultraviolett (100nm) und Infrarot (10000nm) ist.

10. Verwendung des Verfahrens oder des Systems nach einem der vorherigen Ansprüche in einem Laserresonator.

## Claims

1. A method for imaging of a wave front of a medium propagating itself in waves,
**characterized by** the fact that,
- the wave front (2) is divided into partial fronts (4) of correspondingly reduced intensity by a first lens array (3) with at least two partial lenses focusing in each case on a focus (5),
- that the partial fronts (4) formed by the first lens array (3) are imaged on a second lens array (9) with at least two collimating partial lenses (9) by a telecentric imaging system having two single lenses (7, 8),
- that the partial fronts (4) are merged by the second lens array (9) to a collimated emerging wave front (11).

2. A method according to claim 1, **characterized by** the fact that the first lens array (3) divides the wave front (2) into partial fronts (4) by means of deflection, refraction and/or reflection.

3. A system having components arranged one behind another in the direction of propagation, comprising
- a first lens array (3) with at least two partial lenses focusing in each case on a focus (5),
- a first single lens (7),
- a second single lens (8), and
- a second lens array (9) with at least two collimating partial lenses,
**characterized by** the fact that the foci (5) of the first lens array (3) lie in the object-side focal plane (6) of the first single lens (7) and the focal plane (12) of the second lens array (9) lies in the image-side focal plane (12) of the second single lens (8), and that the system is suitable for imaging a wave front of a medium propagating itself in waves in accordance with the method specified in claims 1 and 2.

4. A system according to claim 3, **characterized by** the fact that the foci (5) of the partial lenses of the first lens array (3) lie on a common area (6), in particular in a common focal plane.

5. A system according to claim 3 or 4, **characterized by** the fact that each of the partial lenses of the first lens array (3) acted upon by the wave front has a corresponding counterpart in a partial lens of the second lens array (9), the two corresponding partial lenses being arranged in such a manner that the part of the wave front focused by the first partial lens is imaged by the second partial lens.

6. A system according to any of the preceding claims 3 to 5, **characterized by** the fact that the two single lenses (7, 8) arranged one behind the other have a common focal plane (13).

7. A system according to any of the preceding claims 3 to 6, **characterized by** the fact that the two single lenses (7, 8) form a telecentric beam path.

8. A system according to any of the preceding claims 3 to 7, **characterized by** the fact that the medium is an electromagnetic radiation.

9. A system according to claim 8, **characterized by** the fact that the electromagnetic radiation medium is light with a wavelength in the range between ultraviolet (100nm) and infrared (10000nm).

10. Use of the method or the system according to any of the preceding claims in a laser resonator.

## Revendications

1. Un processus de reproduction du front d'ondes d'un fluide se propageant sous forme d'ondes,
**caractérisé en ce**
- **qu'**un premier système (3) de lentilles, doté d'au moins deux lentilles partielles focalisées sur un foyer (5) image chacune, répartit le front (2) d'ondes en fronts (4) d'ondes partiels d'intensité réduite en conséquence,
- **qu'**un système d'imagerie télécentrique présentant deux lentilles (7, 8) individuelles reproduit les fronts (4) d'ondes partiels formés par le premier système (3) de lentilles sur un second système (9) de lentilles, doté d'au moins deux lentilles (9) partielles collimantes,
- **que** les fronts (4) d'ondes partiels sont assemblés par le second système (9) de lentilles pour former un front (11) d'ondes collimé sortant.

2. Un processus selon la revendication n° 1, **caractérisé en ce que** le premier système (3) de lentilles répartit le front (2) d'ondes en fronts (4) d'ondes partiels par déviation, par réfraction et / ou par réflexion.

3. Un système doté de composants disposés de façon consécutive dans le sens de propagation, comportant
- un premier système (3) de lentilles, doté d'au moins deux lentilles partielles focalisées sur un foyer (5) image chacune,
- une première lentille (7) individuelle,
- une seconde lentille (8) individuelle et
- un second système (9) de lentilles, doté d'au moins deux lentilles partielles collimantes,
**caractérisé en ce que** les foyers (5) image du premier système (3) de lentilles sont situés dans le plan (6) focal objet de la première lentille (7) individuelle et le plan (12) focal du second système (9) de lentilles dans le plan (12) focal image de la seconde lentille (8) individuelle et que le système d'imagerie du front d'ondes d'un fluide se propageant sous forme d'ondes selon le processus des revendications n° 1 et n° 2 est adapté.

4. Un système selon la revendication n° 3,
**caractérisé en ce que** les foyers (5) image des lentilles partielles du premier système (3) de lentilles sont situés sur une même surface (6), en particulier dans un même plan focal.

5. Un système selon la revendication n° 3 ou n° 4,
**caractérisé en ce que** chacune des lentilles partielles du premier système (3) de lentilles, qui sont soumises au front d'ondes incident, possède un équivalent correspondant sous forme de lentille partielle dans le second système (9) de lentilles, cependant que les deux lentilles partielles en correspondance sont disposées de façon telle, que le segment du front d'ondes focalisé par la première lentille partielle est reproduit par la seconde lentille partielle.

6. Un système selon une des revendications n° 3 à n° 5 précédentes,
**caractérisé en ce que** les deux lentilles (7, 8) individuelles disposées l'une derrière l'autre possèdent un plan (13) focal commun.

7. Un système selon une des revendications n° 3 à n° 6 précédentes,
**caractérisé en ce que** les deux lentilles (7, 8) individuelles produisent une propagation des rayons télécentrique.

8. Un système selon une des revendications n° 3 à n° 7 précédentes,
**caractérisé en ce que** le milieu est du rayonnement électromagnétique.

9. Un système selon la revendication n° 8,
**caractérisé en ce que** le milieu est du rayonnement électromagnétique de lumière de longueur d'onde d'un ordre de grandeur compris entre l'ultraviolet (100 nm) et l'infrarouge (10 000 nm).

10. L'utilisation dans une cavité laser du processus ou du système selon une des revendications précédentes.
